(19) Europäisches Patentamt
European Patent Office
Office européen des brevets

(11) **EP 4 307 136 A1**

(12) **EUROPEAN PATENT APPLICATION**
published in accordance with Art. 153(4) EPC

(43) Date of publication:
**17.01.2024 Bulletin 2024/03**

(21) Application number: **22931264.0**

(22) Date of filing: **28.10.2022**

(51) International Patent Classification (IPC):
***G06F 16/2457*** (2019.01)

(52) Cooperative Patent Classification (CPC):
**Y02D 10/00**

(86) International application number:
**PCT/CN2022/128370**

(87) International publication number:
**WO 2023/231288 (07.12.2023 Gazette 2023/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.06.2022 CN 202210619839**

(71) Applicant: **Beijing Baidu Netcom Science Technology Co., Ltd.**
**Beijing 100085 (CN)**

(72) Inventors:
• **LIU, Wei**
**Beijing 100085 (CN)**

• **HUANG, Xinan**
**Beijing 100085 (CN)**
• **QIN, Lifei**
**Beijing 100085 (CN)**
• **CHEN, Haige**
**Beijing 100085 (CN)**
• **YANG, Yu**
**Beijing 100085 (CN)**
• **LI, Ting**
**Beijing 100085 (CN)**
• **BU, Jianguo**
**Beijing 100085 (CN)**
• **LIN, Saiqun**
**Beijing 100085 (CN)**

(74) Representative: **Maiwald GmbH**
**Elisenhof**
**Elisenstraße 3**
**80335 München (DE)**

(54) **SORTING METHOD AND APPARATUS FOR SEARCH RESULTS, AND ELECTRONIC DEVICE AND STORAGE MEDIUM**

(57) A method for sorting search results, includes: acquiring a plurality of first search results corresponding to a search request and an initial order of the plurality of first search results; determining a type and a style of each of at least one first search result in response to the at least one first search result being push information; based on a preset mapping relationship, determining a first score corresponding to each of the at least one first search result according to the type and the style of each of the at least one first search result; and acquiring an updated order of the plurality of first search results by adjusting the initial order in order of the first score from largest to smallest.

acquiring a plurality of first search results corresponding to a search request and an initial order of the plurality of first search results corresponding to the search request — 101

determining a type and a style of each of at least one first search result in response to the at least one first search result being push information — 102

based on a preset mapping relationship, determining a first score corresponding to each of the at least one first search result according to the type and the style of each of the at least one first search result — 103

acquiring an updated order of the plurality of first search results by adjusting the initial order in order of the first score from largest to smallest — 104

FIG. 1

# Description

## CROSS-REFERENCE TO RELATED APPLICATION

This application is based on and claims priority to Chinese Patent Application No. 202210619839.8, filed on June 2, 2022, the entire content of which is incorporated herein by reference.

## TECHNICAL FIELD

The disclosure relates to the field of computer technologies, specifically to the field of artificial intelligence (AI) technologies such as big data, and particularly to a method and an apparatus for sorting search results, an electronic device and a storage medium.

## BACKGROUND

With the constant development of internet technologies, it has become one of main manners for obtaining information origins for person by searching various information via internet. It's an urgent problem to be solved how a search system sort search results after a search is completed, to satisfy a search requirement and achieve information pushing.

## SUMMARY

The disclosure seeks to solve one of the problems existing in the related art to at least some extent.

According to a first aspect of the disclosure, a method for sorting search results is provided. The method includes: acquiring a plurality of first search results corresponding to a search request and an initial order of the plurality of first search results; determining a type and a style of each of at least one first search result in response to the at least one first search result being push information; based on a preset mapping relationship, determining a first score corresponding to each of the at least one first search result according to the type and the style of each of the at least one first search result; and acquiring an updated order of the plurality of first search results by adjusting the initial order in order of the first score from largest to smallest.

According to a second aspect of the disclosure, an apparatus for sorting search results is provided. The apparatus includes: a first acquiring module, configured to acquire a plurality of first search results corresponding to a search request and an initial order of the plurality of first search results; a first determining module, configured to determine a type and a style of each of at least one first search result in response to the at least one first search result being push information; a second determining module, configured to, based on a preset mapping relationship, determine a first score corresponding to each of the at least one first search result according to the type and the style of each of the at least one first search result; and a second acquiring module, configured to acquire an updated order of the plurality of first search results by adjusting the initial order in order of the first score from largest to smallest.

According to a third aspect of the disclosure, a computer device is provided. The computer device includes a memory, a processor and a computer program stored on the memory and executable by the processor, in which the processor realizes the method as described in the first aspect of embodiments of the disclosure when executing the computer program.

According to a fourth aspect of the disclosure, a non-transitory computer-readable storage medium with a computer program stored thereon is provided. The computer program realizes the method as described in the first aspect of embodiments of the disclosure when executed by a processor.

According to a fifth aspect of the disclosure, a computer program product is provided, in which when instructions in the computer program product are executed by a processor, the method as described in the first aspect of embodiments of the disclosure is performed.

In embodiments of the disclosure, the plurality of first search results corresponding to the search request and the initial order of the plurality of first search results are acquired first; the type and the style of each of at least one first search result are determined in response to the at least one first search result being push information; based on the preset mapping relationship, the first score corresponding to each of the at least one first search result is determined according to the type and the style of each of the at least one first search result; and the updated order of the plurality of first search results is acquired by adjusting the initial order in order of the first score from largest to smallest. Thus, when at least one of the plurality of first search results is determined as the push information, the first search result(s) determined as the push information may be re-rated, and further the initial order of the plurality of first search results may be updated and adjusted, so that the final order may not only satisfy a search requirement of a user, but also mine an information value of search results, to achieve information pushing and improve a value brought by the sorting result.

Additional aspects and advantages of the disclosure will be given in part in the following descriptions, become apparent in part from the following descriptions, or be learned from the practice of the disclosure.

## BRIEF DESCRIPTION OF THE DRAWINGS

The above and/or additional aspects and advantages of the disclosure will become apparent and more readily from the following descriptions of the embodiments made with reference to the accompanying drawings, in which:

FIG. 1 is a flowchart illustrating a method for sorting search results provided in some embodiments of the disclosure;

FIG. 2 is a flowchart illustrating a method for sorting search results provided in some embodiments of the disclosure;

FIG. 3 is a flowchart illustrating a method for sorting search results provided in some embodiments of the disclosure;

FIG. 4 is a flowchart illustrating a method for sorting search results provided in some embodiments of the disclosure;

FIG. 5 is a block diagram illustrating an apparatus for sorting search results provided in some embodiments of the disclosure; and

FIG. 6 is a block diagram illustrating an electronic device for implementing a method for sorting search results in embodiments of the disclosure.

## DETAILED DESCRIPTION

Embodiments of the disclosure are described in detail below and examples of embodiments are illustrated in the accompanying drawings, in which the same or similar labels represent the same or similar elements or elements with the same or similar functions throughout the descriptions. The embodiments described below with reference to the accompanying drawings are exemplary, are intended to be used to explain the disclosure and are not to be construed as a limitation of the disclosure.

Artificial intelligence (AI) is a subject that studies a computer to simulate certain thinking processes and intelligent behaviors (such as learning, reasoning, thinking, planning, etc.) of human beings, which covers hardware-level technologies and software-level technologies. AI hardware technologies include technologies such as sensors, dedicated AI chips, cloud computing, distributed storage and big data processing; and AI software technologies include computer vision technology, speech recognition technology, natural language processing (NLP) technology and machine learning (ML), deep learning (DL), big data processing technology and knowledge graph (KG) technology.

Big data processing refers to a process of analyzing and processing a huge amount of data by artificial intelligence (AI). Big data may be summarized as 5Vs, that is, volume, velocity, variety, value and veracity.

A method and an apparatus for sorting search results, an electronic device and a storage medium in embodiments of the disclosure are described with reference to the accompanying drawings.

A method for sorting search results is provided in the disclosure, which may be executed by an apparatus for sorting search results provided in the disclosure or by an electronic device provided in the disclosure. The electronic device may include but not limited to various hardware devices with operating systems, touch screens, and/or display screens such as a desktop computer, a tablet computer, a cloud device, a mobile device and a personal digital assistant, or may be a server. A method for sorting search results provided in the disclosure is performed by a search system provided in the disclosure, which does not constitute a limitation of the disclosure.

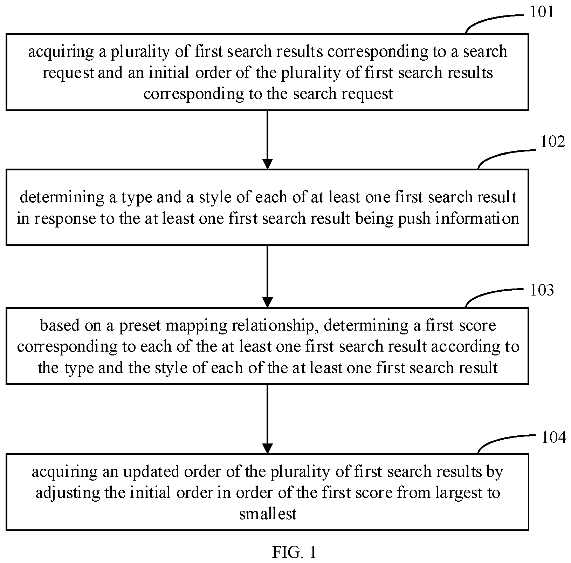

FIG. 1 is a flowchart illustrating a method for sorting search results provided in some embodiments of the disclosure.

As illustrated in FIG. 1, the method for sorting search results may include the following steps.

At step 101, a plurality of first search results corresponding to a search request and an initial order of the plurality of first search results are acquired.

The search request may be generated by the search system based on any search text input by the user or based on any search item clicked by the user, which is not limited in the disclosure.

For example, when the user inputs "apple" in the input box and triggers the enter key, the search system may generate the search request corresponding to "apple" and display, for the user, search results corresponding to the search request.

The first search results may be search results queried by the search system (a search engine) based on the search request of the user. In the disclosure, the first search results may be search engine results page(s) (SERP(s)), that is, results page(s) fed back by the search system on the current search request.

It needs to be noted that, when each of the plurality of first search results corresponding to the search request is determined, the search system may filter abnormal data by cleaning data of each of the plurality of first search results first, and may sort each of the plurality of first search results based on the relevance of each of the plurality of first search results to the search request, further to generate the initial order.

In the disclosure, the relevance of each of the plurality of first search results to the search request may be calculated based on a machine learning algorithm, such as a term frequency & inverse document frequency (TF/IDF) algorithm, which is not limited in the disclosure.

For example, first search results corresponding to current search request Q are respectively X, Y, Z, a relevance of X to the search request Q is 0.05, a relevance of Y to the search request Q is 0.6, and a relevance of Z to the search request Q is 0.3. Thus, Y-Z-X may be determined as the initial order, which is not limited in the disclosure.

In some embodiments, the search system may further determine the initial order of the plurality of first search results based on the relevance of each of the plurality of first search results to the search request, and a number of clicks of each of the plurality of first search results within a preset duration.

The preset duration may be a period of time with a specified period. For example, one historical month or one historical week, which is not limited in the disclosure. For example, when a current time is April 1, a duration between March 1 and April 1 is determined as the preset duration.

It needs to be noted that, a number of clicks of a certain search result is usually different within different durations, that is, a number of clicks is often time-based. Therefore, the preset duration in the disclosure may be set to a recent historical duration. For example, a duration of one week from a current time.

For example, when the preset durations is a latest one week, the first search results corresponding to the current search request Q are respectively X, Y, Z, a relevance of X to the search request Q is 0.8, a relevance of Y to the search request Q is 0.6, a relevance of Z to the search request Q is 0.2, a number of clicks of X within the latest one week is 80, a number of clicks of Y within the latest one week is 100, and a number of clicks of Z within the latest one week is 30, in which X is 0.8x80=64, Y is 0.6x100=60, and Z is0.2x30=6. Thus, the initial order of X, Y, Z is X, Y, Z. It is only an illustrative description of the disclosure, which is not limited in the disclosure.

Thus, the initial order of the plurality of first search results may match a search intention of the user better. The user may acquire content with a hot value more conveniently.

At step 102, a type and a style of each of at least one first search result are determined in response to the at least one first search result being push information.

The push information may be information with a commercial value, such as information with a high search frequency and information with a high click value rate, which is not limited in the disclosure.

The type may be a comprehensive page, a list page, a content page, which is not limited in the disclosure.

The style may be a graph, a video, a card, which is not limited in the disclosure.

As a possible implementation, each of the plurality of first search results may be input into a pre-trained neural network model to label a value corresponding to each of the plurality of first search results, for example, "high-value", "medium value" and "low-value". Further, the first search result(s) labeled as "high-value" may be determined as the push information.

It should be noted that, when the push information in the plurality of first search results is determined, at least one first search result corresponding to the push information may be sorted. It should be noted that, when the at least one first search result is sorted, the first search result(s) may be measured based on a plurality of dimensions, such as quality, timeliness and correlation, which is not limited in the disclosure. In the disclosure, the push information may be sorted based on a page feature of the at least one first search result.

The page feature may include the type, the style, etc.

It may be understood that for search results of different types and different styles, selection tendencies of the users are usually different, so that the type and the style of the first search result(s) corresponding to the current push information may be determined, and the first search result(s) may be evaluated based on this.

At step 103, based on a preset mapping relationship, a first score corresponding to each of the at least one first search result is determined according to the type and the style of each of the at least one first search result.

The first score may be the score of the page with each type and each style. Specifically, the first scores of the pages with the same type and the same style may be the same, and first scores of pages with different types and different styles may be the same or different.

It needs to be noted that, selection tendencies of the users for different types and different styles are usually different. For example, some users often tend to select the page of the video style in the page of the video style and the page of the text style. Therefore, a click rate of the page of the video style is relatively high. In another cases, some users often tend to select the page of the content type in the page of the content type and the page of the comprehensive type, which is not limited in the disclosure. Therefore, the score corresponding to each type and each style may be preset based on a number of clicks or a click value rate of pages of each type and each style, of users, in historical data, and represent a love degree and a value of the page content for users.

In some embodiments, a mapping relationship table may be pre-configured. The first score corresponding to the type and the style corresponding to the page content may be preset in the mapping relationship table. Further, the search system may determine the first score corresponding to each of the at least one first search result according to the current type and the current style of each of the at least one first search result when determining each of the at least one first search result corresponding to the push information.

At step 104, an updated order of the plurality of first search results is acquired by adjusting the initial order in order of the first score from largest to smallest.

It may be understood that, the first score corresponding to the at least one first search result may be determined in response to the at least one first search result being push information, and the at least one first search result may be sorted in order of the first score from largest to smallest, and the initial order may be further adjusted.

For example, the initial order is r1, r2, r3, r4, r5, r6, r7, in which r1, r3, r6 are push information, the first score corresponding to r1 is 2, the first score corresponding to r3 is 5, and the first score corresponding to r6 is 4, r1, r3, r6 may be reordered as r3, r6, r1, and the initial order may be updated. Furthermore, the updated order of r3, r2, r6, r4, r5, r1, r7 is acquired, which is not limited in the disclosure. Alternatively, each of the at least one first search result corresponding to the push information may be further placed first, to obtain the updated order of r3, r6, r1, r2, r4, r5, r7, which is not limited in the disclosure.

In embodiments of the disclosure, the plurality of first search results corresponding to the search request and the initial order of the plurality of first search results are acquired first; the type and the style of each of at least one first search result are determined in response to the at least one first search result being push information; based on the preset mapping relationship, the first score corresponding to each of the at least one first search result is determined according to the type and the style of each of the at least one first search result; and the updated order of the plurality of first search results is acquired by adjusting the initial order in order of the first score from largest to smallest. Thus, when at least one of the plurality of first search results is determined as the push information, the first search result(s) determined as the push information may be re-rated, and further the initial order of the plurality of first search results may be updated and adjusted, so that the final order may not only satisfy a search requirement of a user, but also mine an information value of search results, to achieve information pushing and improve a value brought by the sorting result.

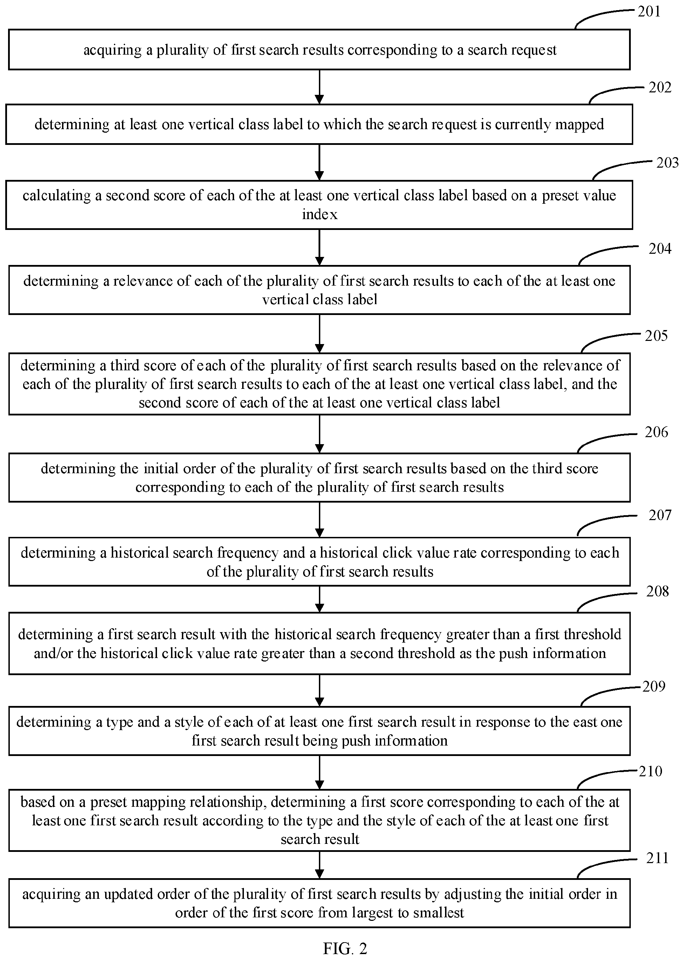

FIG. 2 is a flowchart illustrating a method for sorting search results provided in some embodiments of the disclosure.

As illustrated in FIG. 2, the method for sorting search results may include the following steps.

At step 201, a plurality of first search results corresponding to a search request are acquired.

It needs to be noted that, the specific implementation of step 201 may refer to the above embodiments, which will not be repeated herein.

At step 202, at least one vertical class label to which the search request is currently mapped is determined.

The vertical class label may be a classification label in a vertical field. It should be noted that one search request may map one or more different vertical class labels, and the vertical class label may be configured to represent a field or an industry to which the current search content belongs.

For example, when the search text included in the current search request is "hundred flowers", vertical class labels mapped by the search text may be {poem}, {road name}, {flower}, {award}, {film and television} and the like, which is not limited in the disclosure.

Alternatively, when the search text included in the current search request is "New Oriental", vertical class labels mapped by the search text may be {cooking school}, {English training school}, direction I and the like, which is not limited in the disclosure.

At step 203, a second score of each of the at least one vertical class label is calculated based on a preset value index.

There may be a plurality of preset value indexes, such as a click-through rate (CTR), a click value rate (CVR), a search frequency, a cost per click (CPC), a cost per action (CPA) and a cost per mille (CPM), which is not limited in the disclosure.

The second score may be a score for the vertical class label, for representing a value of the vertical class label, that is, the higher the second score is, the greater the value of the corresponding vertical class label is.

Specifically, the search system may obtain various data corresponding to the value index according to the preset value index, and filter abnormal data by cleaning data, such as low-quality data, cheating data, null and short data and expired data.

In the disclosure, a plurality of pages corresponding to each of the at least one vertical class label may be selected, and a score corresponding to each page and the value index may be obtained based on the preset value index, and further a score corresponding to each of the at least one vertical class label is calculated based on the score of each page on each value index and a weight corresponding to each value index.

Specifically, it may be calculated by the following equation of:

$$value\_score = sigmoid\ \left(\textstyle\sum w * value\_info\right)$$

where value_score is the second score corresponding to the vertical class label, value_info is a score corresponding to each value index, w is a weight corresponding to each value index, and sigmoid is an activation function.

At step 204, a relevance of each of the plurality of first search results to each of the at least one vertical class label is determined.

In the disclosure, the relevance of each of the plurality of first search results to each of the at least one vertical class label may be calculated based on a machine learning algorithm, such as a term frequency & inverse document frequency (TF/IDF) algorithm, which is not limited in the disclosure.

For example, if there are three current first search results, which are respectively a1, a2, a3, and there are three vertical class labels mapped by the current search request, which are respectively s1, s2, s3, a relevance between a1 and s1, a relevance between a1 and s2 and a relevance between a1 and s3, a relevance between a2 and s1, a relevance between a2 and s2 and a relevance between a2 and s3, a relevance between a3 and s1, a relevance between a3 and s2 and a relevance between a3 and s3, need to be calculated.

It needs to be noted that, the above example is only an illustrative description, which is not limited in the disclosure.

At step 205, a third score of each of the plurality of first search results is determined based on the relevance of each of the plurality of first search results to each of the at least one vertical class label, and the second score of each of the at least one vertical class label.

The third score may be an initial order score of the first search result. That is, in the disclosure, each of the first search results may be sorted based on a size of the third score of each of the first search results.

For example, there are five first search results, which are respectively A, B, C, D, E, and there are three vertical class labels, which are respectively x, y, z, a second score of the vertical class label corresponding to x is 20, a second score of the vertical class label corresponding to y is 15, and a second score of the vertical class label corresponding to z is 10. A relevance of A to x is 0.8, a relevance of A to y is 0.7, and a relevance of A to z is 0.6; a relevance of B to x is 0.9, a relevance of B to y is 0.2, and a relevance of B to z is 0.2; a relevance of C to x is 0.6, a relevance of C to y is 0.6, and a relevance of C to z is 0.6; a relevance of D to x is 0.2, a relevance of D to y is 0.8, and a relevance of D to z is 0.1; a relevance of E to x is 0.5, a relevance of E to y is 0.8, and a relevance of E to z is 0.8.

Further, the second score of each of the plurality of first search results on each of at least one vertical label may be multiplied by the relevance, and multiplication results may be finally added to calculate a size of the third score of each of the plurality of first search results.

A third score of A is $20x0.8+15x0.7+10x0.6=32.5$, a third score of B is $20x0.9+15x0.2+10x0.2=23$, a third score of C is $20x0.6+15x0.6+10x0.6=27$, a third score of D is $20x0.2+15x0.8+10x0.1=17$, and a third score of E is $20x0.5+15x0.8+10x0.8=30$. Thus, it may be sorted based on the third score 32.5 corresponding to A, the third score 23 corresponding to B, the third score 27 corresponding to C, the third score 17 corresponding to D, and the third score 30 corresponding to E.

It needs to be noted that, the above example is only an illustrative description, which is not limited in the disclosure.

At step 206, the initial order of the plurality of first search results is determined based on the third score corresponding to each of the plurality of first search results.

For example, when the third score corresponding to the first search result A is 32.5, the third score corresponding to the first search result B is 23, the third score corresponding to the first search result C is 27, the third score corresponding to the first search result D is 17, and the third score corresponding to the first search result E is 30, A, B, C, D, E may be sorted as A, E, C, B, D.

It needs to be noted that, the initial order may consider the relevance of the first search result to the current search request and the value of each of the at least one vertical class label mapped by the search request, so that the current initial order may meet the search requirement of the user and have the higher commercial value.

At step 207, a historical search frequency and a historical click value rate corresponding to each of the plurality of first search results are determined.

The historical search frequency may be a number of search times of any search result in a specified historical duration.

The click value rate may be a conversion rate that a user signs up, activates or becomes a paid user by clicking any search result in a given historical duration.

It needs to be noted that, each of the plurality of first search results has a certain search frequency and a certain click value rate within any historical duration. In the disclosure, a current historical duration to be counted may be determined first, and a historical search frequency and a historical click value rate corresponding to each of the plurality of first search results within the duration may be acquired.

At step 208, a first search result with the historical search frequency greater than a first threshold and/or the historical click value rate greater than a second threshold is determined as the push information.

The first threshold may be a threshold of the historical search frequency. When the historical search frequency is greater than the first threshold, it indicates that the first search result is hot, and a number of search times of users is very large, and a size of the first threshold may be set based on the actual experience.

The second threshold may be a threshold of the historical click value rate. When the historical click value rate is greater than the second threshold, it indicates that a conversion rate of the first search result is high, and a revenue brought is large, and a size of the second threshold may be set based on the actual experience.

It should be noted that, when the historical search frequency of any historical search result is high or the click value rate of any historical search result is high, it indicates that the historical search result is favored by the user, and is content the user tends to select.

The push information may be information with a certain commercial value and the user tends to select it, and the user may contact content with a more commercial value by pushing the push information to the user.

In some embodiments, the first search result with the historical search frequency greater than the first threshold in each of the plurality of first search results may be determined as the push information, or the first search result with the historical click value rate greater than the second threshold in each of the plurality of first search results may also be determined as the push information, or the first search result with the historical click value rate greater than the second threshold and the historical search frequency greater than the first threshold may also be determined as the push information, which is not limited herein.

At step 209, a type and a style of each of at least one first search result are determined in response to the east one first search result being push information.

At step 210, based on a preset mapping relationship, a first score corresponding to each of the at least one first search result is determined according to the type and the style of each of the at least one first search result.

At step 211, an updated order of the plurality of first search results is acquired by adjusting the initial order in order of the first score from largest to smallest.

It needs to be noted that, the specific implementation of steps 209, 210 and 211 may refer to the above embodiments, which will not be repeated herein.

In embodiments of the disclosure, the plurality of first search results corresponding to the search request are acquired first, and the at least one vertical class label to which the search request is currently mapped is determined, and the second score of each of the at least one vertical class label is calculated based on the preset value index, and the relevance of each of the plurality of first search results to each of the at least one vertical class label is determined, and the third score of each of the plurality of first search results is determined based on the relevance of each of the plurality of first search results to each of the at least one vertical class label, and the second score of each of the at least one vertical class label, and the initial order of the plurality of first search results is determined based on the third score corresponding to each of the plurality of first search results, and the historical search frequency and the historical click value rate corresponding to each of the plurality of first search results are determined, and the first search result with the historical search frequency greater than the first threshold and/or the historical click value rate greater than the second threshold are determined as the push information, and the type and the style of each of at least one first search result are determined in response to the east one first search result being push information, and based on the preset mapping relationship, the first score corresponding to each of the at least one first search result is determined according to the type and the style of each of the at least one first search result, and the updated order of the plurality of first search results is acquired by adjusting the initial order in order of the first score from largest to smallest. Thus, the first search result with the historical search frequency greater than the first threshold and/or the historical click value rate greater than the second threshold is pushed as the push information, so that the page with the higher love degree of users may be preferentially displayed. Since the initial order is determined based on the relevance of each of the plurality of first search results to the vertical class label and the second score of the vertical class label, the initial order may consider the relevance of the first search result to the current search request and the value of each of the at least one vertical class label mapped by the search request, so that the current initial order may meet the search requirement of the user and have the higher commercial value.

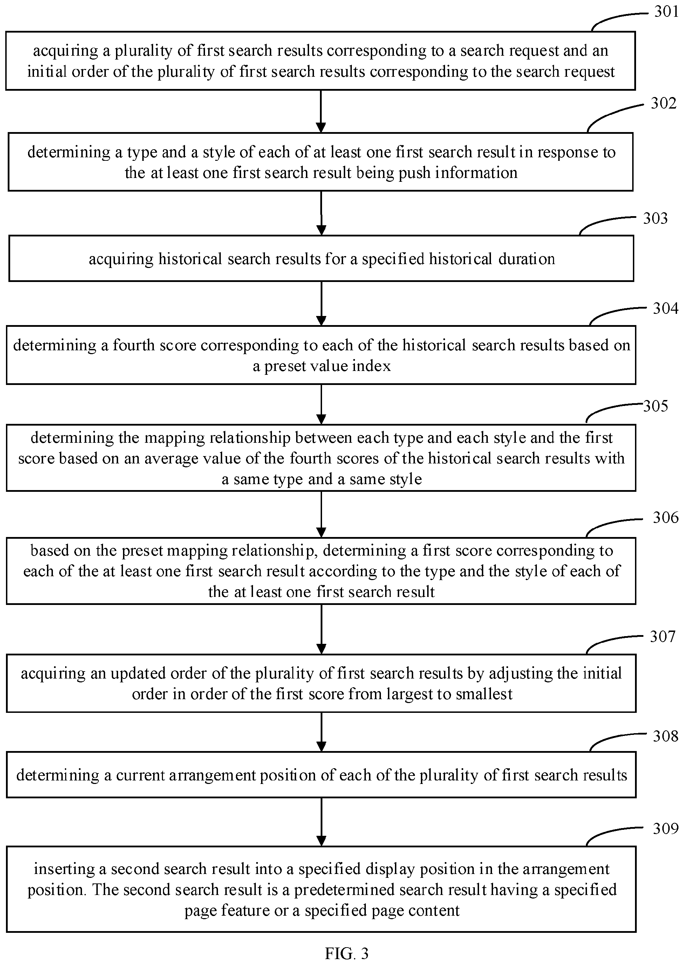

FIG. 3 is a flowchart illustrating a method for sorting search results provided in some embodiments of the disclosure.

As illustrated in FIG. 3, the method for sorting search results may include the following steps.

At step 301, a plurality of first search results corresponding to a search request and an initial order of the plurality of first search results are acquired.

At step 302, a type and a style of each of at least one first search result are determined in response to the at least one first search result being push information.

It needs to be noted that, the specific implementation of steps 301 and 302 may refer to the above embodiments, which will not be repeated herein.

At step 303, historical search results for a specified historical duration are acquired.

The specified historical duration may be a pre-selected duration. For example, a duration of one week from a current date, which is not limited in the disclosure. It should be noted that an end point of the specified historical duration may be the current date, that is, the specified historical duration is a duration adjacent to the current date, so that it guarantees that each of the historical search results in the current historical duration may represent a selection tendency and a personal intention of the current user, that is, an influence of timeliness on sorting is considered.

The historical search results may be content searched by each user on the search system.

At step 304, a fourth score corresponding to each of the historical search results is determined based on a preset value index.

There may be a plurality of preset value indexes, such as CTR, CVR, a search frequency, CPC, CPA CPM, which is not limited in the disclosure.

The fourth score may be a score for the historical search result and represents a value of the historical search result, that is, the higher the fourth score is, the greater the value of the corresponding historical search result is.

Specifically, the search system may obtain various data corresponding to the value index according to the preset value index, and filter abnormal data by cleaning data, such as low-quality data, cheating data, null and short data and expired data.

In the disclosure, the search system may obtain a score corresponding to each of the historical search results and the value index based on the preset value index, and further calculate a score corresponding to each of the historical search results based on the score of each of the historical search results on each value index and a weight corresponding to each of the value indexes.

Specifically, the score may be calculated by the following equation:

$$\text{value\_score} = \text{sigmoid}\ (\textstyle\sum \text{w*value\_info})$$

where, value_score is the fourth score corresponding to the historical search result, value_info is a score corresponding to each value index, w is a weight corresponding to each value index, and sigmoid is an activation function.

At step 305, the mapping relationship between each type and each style and the first score is determined based on an average value of the fourth scores of the historical search results with the same type and the same style.

It needs to be noted that, each of the historical search results has the corresponding type and the corresponding style. The type may be a content page, a list page and a comprehensive page, which is not limited in the disclosure. The style may be a graph, a video, a card, which is not limited in the disclosure.

Each of the historical search results may be classified based on the type and the style when each of the historical search results is acquired, and further each type may be determined, that is, the average value of the fourth scores of the historical search results of each same type and each same style.

Further, the average value of the fourth scores of the historical search results with the same type and the same style may be determined as the first score corresponding to the same type and the same style, that is, the mapping relationship between the type and the style and the first score may be established.

At step 306, based on a preset mapping relationship, a first score corresponding to each of the at least one first search result is determined according to the type and the style of each of the at least one first search result.

At step 307, an updated order of the plurality of first search results is acquired by adjusting the initial order in order of the first score from largest to smallest.

It needs to be noted that, the specific implementation of steps 306 and 307 may refer to the above embodiments, which will not be repeated here.

At step 308, a current arrangement position of each of the plurality of first search results is determined.

It should be noted that, when an order of each of the plurality of first search results is determined, each of the plurality of first search results may correspond to a current arrangement position.

For example, when the first search results are Q1, Q2, Q3, Q4, Q5, Q6, Q7, arrangement positions respectively corresponding to Q1, Q2, Q3, Q4, Q5, Q6, Q7 may be determined, for example, Q 1 is arranged in a first row of a first page, Q2 is arranged in a second row of the first page, Q3 is arranged in a third row of the first page, Q4 is arranged in a fourth row of the first page, Q5 is arranged in a first row of a second page, Q6 is arranged in a second row of the second page, and Q7 is arranged in a third row of the second page, which is not limited in the disclosure.

At step 309, a second search result is inserted into a specified display position in the arrangement position. The second search result is a predetermined search result having a specified page feature or a specified page content.

The specified display position may be a pre-specified arrangement position, such as a first set position, a second set position, or a third set position, which is not limited in the disclosure. There may be one or more specified display positions.

The second search result may be the search result having the specified page feature or the specified page content. For example, when the search text queried by the user is determined as "Jiankang Road" based on the current search request, a Baidu map corresponding to "Jiankang Road" may be determined as the second search result. Alternatively, when the search text queried by the user is determined as "mathematical modeling" based on the current search request, a Baidu encyclopedia corresponding to "mathematical modeling" may be determined as the second search result. Alternatively, when the search text queried by the user is determined as "CCTV NEWS" based on the current search request, a page with a video page feature may be determined as the second search result, which is not limited in the disclosure.

In some cases, a query may further be performed in a target list library based on the search request to determine whether there is a partner corresponding to the search request. Each partner list may be preset in the target list library. The search system may determine a corresponding page content based on the partner and determine the page content as the second search result when retrieving the partner corresponding to the search request in the target list library.

In some embodiments, the second search result may be inserted into the specified display position in the arrangement position in response to there being one second search result.

For example, when the specified display position is the first set position, the search system may insert the second search result in front of the first search result of the original first set position, and update a current order.

Alternatively, a plurality of second search results may be inserted into each of the specified display positions in the arrangement position in a preset order in response to there being the plurality of second search results.

It should be noted that, in some cases, there may be a plurality of specified display positions. For example, when there are three second search results, the three second search results may be arranged at the first set position, the second set position and the third set position in the preset order and update a current order.

It needs to be noted that, the above example is only an illustrative description, which is not limited in the disclosure.

In embodiments of the disclosure, the plurality of first search results corresponding to the search request and the initial order of the plurality of first search results are acquired first; the type and the style of each of the at least one first search result are determined in response to the at least one first search result being the push information; and the historical search results for the specified historical duration are acquired; and the fourth score corresponding to each of the historical search results is determined based on the preset value index, and the mapping relationship between each type and each style and the first score is determined based on the average value of the fourth scores of the historical search results with the same type and the same style, and based on the preset mapping relationship, the first score corresponding to each of the at least one first search result is determined according to the type and the style of each of the at least one first search result, and the updated order of the plurality of first search results is acquired by adjusting the initial order in order of the first score from largest to smallest, and the current arrangement position of each of the plurality of first search results is determined, and the second search result is inserted into the specified display position in the arrangement position. Thus, when each of the plurality of first search results is sorted, second search results in other dimensions may be combined with the first search results, thereby improving the value of the sorting result and meeting the search requirement of the user better.

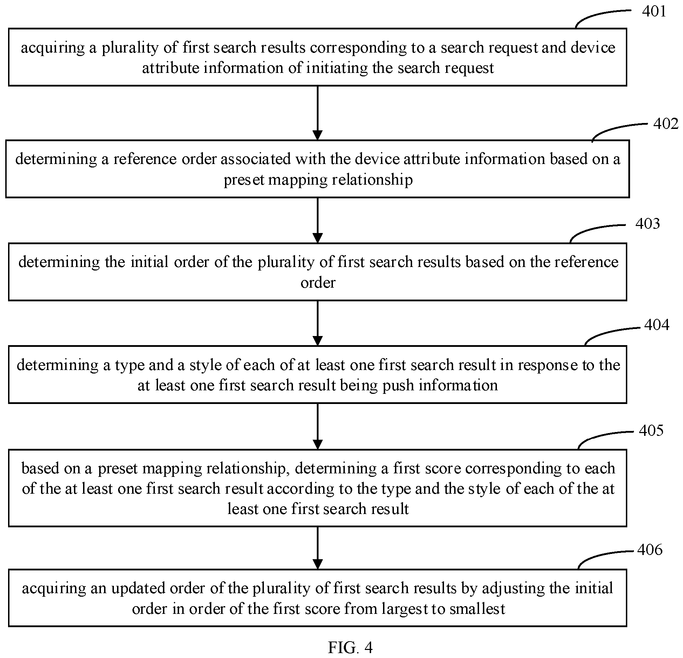

FIG. 4 is a flowchart illustrating a method for sorting search results provided in some embodiments of the disclosure.

As illustrated in FIG. 4, the method for sorting search results may include the following steps.

At step 401, a plurality of first search results corresponding to a search request and device attribute information of initiating the search request are acquired.

The search request may be generated by the search system based on any search text input by the user or based on any search item clicked by the user, which is not limited in the disclosure.

For example, when the user inputs "apple" in the input box and triggers the enter key, the search system may generate the search request corresponding to "apple" and display, for the user, search results corresponding to the search request.

The first search results may be search results queried by the search system (a search engine) based on the search request of the user. In the disclosure, the first search results may be search engine results page(s) (SERP(s)), that is, results page(s) fed back by the search system on the current search request.

The device attribute information of initiating the search request may be related information of the device and related information of the user of the device, such as a device type, a network type used by the device and information of the user to which the device belongs, which is not limited in the disclosure.

In some embodiments, the device attribute information includes at least one of: a device type, a network type used by a device and attribute information of a user to which the device belongs.

The device type may be a computer, a mobile phone, or a tablet, which is not limited in the disclosure.

The network type used by the device may be a local area network (LAN), a metropolitan area network (MAN), a wide area network (WAN), and Internet, which is not limited in the disclosure.

The attribute information of the user may be a gender, an age, an occupation of the user, a device use time, page operation record information, which is not limited in the disclosure.

At step 402, a reference order associated with the device attribute information is determined based on a preset mapping relationship.

The reference order may be an order of page features, where the page features may include a page type and a page style.

It should be noted that the device of initiating the search request may affect a habit that the user browses each first search result to a certain extent. For example, a computer device is more suitable for playing a page of a video type compared with a mobile phone device, and a tablet computer is more suitable for displaying a page of a card type compared with the mobile phone device.

In addition, selections of device users of different ages for page types are generally different. A page type a woman likes to view is also different from a page type a man likes to view.

Therefore, the corresponding reference order may be determined in advance based on the device attribute information. For example, a unique reference order corresponding to the search request may be determined based on the device type corresponding to the current search request, the network type used by the device and the attribute information of the user to which the device belongs.

For example, the reference order corresponding to the current device attribute information may be determined based on the mapping relationship between the preset device attribute information and the reference order. The mapping relationship may be determined based on historical device attribute information and an operation record of the user on the search result.

For example, for device attribute information A, a reference order corresponding to the device attribute information A may be U, V, Z, for device attribute information B, a reference order corresponding to the device attribute information B may be U, Z, V, and for device attribute information C, a reference order corresponding to the device attribute information C may be Z, V, U, which is not limited in the disclosure. U, V, Z may be different page features, such as a long video page comprehensive page, a card list page, and a short video content page, which is not limited in the disclosure.

At step 403, an initial order of the plurality of first search results is determined based on the reference order.

The search system may sort the first search results based on the page features of the first search results and the reference order corresponding to the current page feature in response to determining the reference order, thereby determining the initial order of the plurality of first search results.

At step 404, a type and a style of each of at least one first search result are determined in response to the at least one first search result being push information.

At step 405, based on a preset mapping relationship, a first score corresponding to each of the at least one first search result is determined according to the type and the style of each of the at least one first search result.

At step 406, an updated order of the plurality of first search results is acquired by adjusting the initial order in order of the first score from largest to smallest.

It needs to be noted that, the specific implementation of steps 404, 405 and 406 may refer to the above embodiments, which will not be repeated here.

In embodiments of the disclosure, the plurality of first search results corresponding to the search request and the device attribute information of initiating the search request are acquired, and the reference order associated with the device attribute information is determined based on the preset mapping relationship, and the initial order of the plurality of first search results is determined based on the reference order, and the type and the style of each of at least one first search result are determined in response to the at least one first search result being push information; based on the preset mapping relationship, the first score corresponding to each of the at least one first search result is determined according to the type and the style of each of the at least one first search result; and the updated order of the plurality of first search results is acquired by adjusting the initial order in order of the first score from largest to smallest. Thus, the reference order may be determined based on the device attribute information of the search request and the preset mapping relationship, and further the first search result may be sorted to determine the initial order with the more reference value, and the initial order of the first search results may be updated and adjusted, so that the final order may not only meet the search requirement of a user, but also mine the information value of the search result, to achieve the information push and improve the value brought by the sorting result.

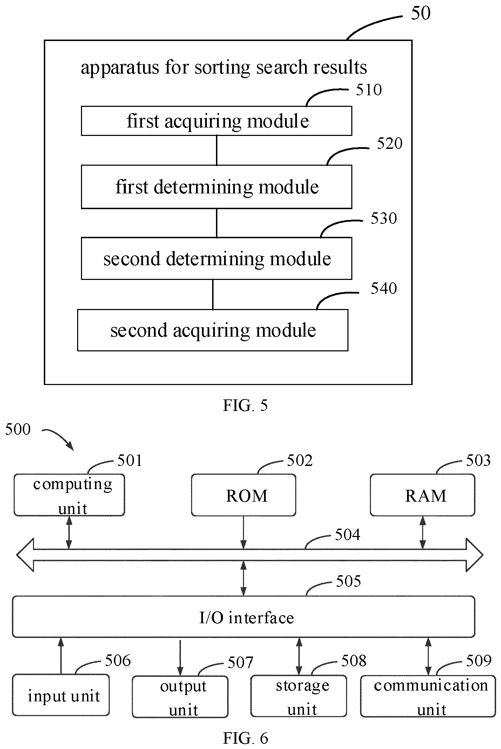

FIG. 5 is a block diagram illustrating an apparatus for sorting search results provided in some embodiments of the disclosure.

As illustrated in FIG. 5, an apparatus 50 for sorting search results may include a first acquiring module 510, a first determining module 520, a second determining module 530 and a second acquiring module 540.

The first acquiring module 510 is configured to acquire a plurality of first search results corresponding to a search request and an initial order of the plurality of first search results.

The first determining module 520 is configured to determine a type and a style of each of at least one first search result in response to the at least one first search result being push information.

The second determining module 530 is configured to, based on a preset mapping relationship, determine a first score corresponding to each of the at least one first search result according to the type and the style of each of the at least one first search result.

The second acquiring module 540 is configured to acquire an updated order of the plurality of first search results by adjusting the initial order in order of the first score from largest to smallest.

In some embodiments, the first acquiring module 510 is specifically configured to:
determine the initial order of the plurality of first search results based on a relevance of each of the plurality of first search results to the search request, and a number of clicks of each of the plurality of first search results within a preset duration.

In some embodiments, the first acquiring module 510 is specifically configured to:

determine at least one vertical class label to which the search request is currently mapped;
calculate a second score of each of the at least one vertical class label based on a preset value index;
determine a relevance of each of the plurality of first search results to each of the at least one vertical class label;
determine a third score of each of the plurality of first search results based on the relevance of each of the plurality of first search results to each of the at least one vertical class label, and the second score of each of the at least one vertical class label; and
determine the initial order of the plurality of first search results based on the third score corresponding to each of the plurality of first search results.

In some embodiments, the first acquiring module 510 is further configured to:

determine a historical search frequency and a historical click value rate corresponding to each of the plurality of first search results; and
determine a first search result with the historical search frequency greater than a first threshold and/or the historical click value rate greater than a second threshold as the push information.

In some embodiments, the second determining module 530 is further configured to:

acquire historical search results for a specified historical duration;
determine a fourth score corresponding to each of the historical search results based on a preset value index; and
determine the mapping relationship between each type and each style and the first score based on an average value of the fourth scores of the historical search results with a same type and a same style.

In some embodiments, the second acquiring module 540 includes a determining unit and an insertion unit.

The determining unit is configured to determine a current arrangement position of each of the plurality of first search results.

The insertion unit is configured to insert a second search result into a specified display position in the arrangement position. The second search result is a predetermined search result having a specified page feature or a specified page content.

In some embodiments, there is one or more specified display positions. The insertion unit is specifically configured to:

insert the second search result into the specified display position in the arrangement position in response to there being one second search result; or,

insert a plurality of second search results into each of the specified display positions in the arrangement position in a preset order in response to there being the plurality of second search results.

In embodiments of the disclosure, the plurality of first search results corresponding to the search request and the initial order of the plurality of first search results are acquired first; the type and the style of each of at least one first search result are determined in response to the at least one first search result being push information; based on the preset mapping relationship, the first score corresponding to each of the at least one first search result is determined according to the type and the style of each of the at least one first search result; and the updated order of the plurality of first search results is acquired by adjusting the initial order in order of the first score from largest to smallest. Thus, when at least one of the plurality of first search results is determined as the push information, the first search result(s) determined as the push information may be re-rated, and further the initial order of the plurality of first search results may be updated and adjusted, so that the final order may not only satisfy a search requirement of a user, but also mine an information value of search results, to achieve information pushing and improve a value brought by the sorting result.

An electronic device, a readable storage medium and a computer program product are further provided according to embodiments of the disclosure.

FIG. 6 is a schematic block diagram illustrating an example electronic device 500 in the embodiments of the disclosure. The electronic device is intended to represent various types of digital computers, such as laptop computers, desktop computers, workstations, personal digital assistants, servers, blade servers, mainframe computers, and other suitable computers. The electronic device may also represent various types of mobile apparatuses, such as personal digital assistants, cellular phones, smart phones, wearable devices, and other similar computing devices. The components shown herein, their connections and relations, and their functions are merely examples, and are not intended to limit the implementation of the disclosure described and/or required herein.

As illustrated in FIG. 6, a device 500 includes a computing unit 501, configured to execute various appropriate actions and processes according to a computer program stored in a read-only memory (ROM) 502 or loaded from a storage unit 508 to a random access memory (RAM) 503. In the RAM 503, various programs and data required for the device 500 may be stored. The computing unit 501, the ROM 502 and the RAM 503 may be connected with each other by a bus 504. An input/output (I/O) interface 505 is also connected to the bus 504.

A plurality of components in the device 500 are connected to an I/O interface 505, and includes: an input unit 506, for example, a keyboard, a mouse; an output unit 507, for example, various types of displays, speakers; a storage unit 508, for example, a magnetic disk, an optical disk; and a communication unit 509, for example, a network card, a modem, a wireless transceiver. The communication unit 509 allows the device 500 to exchange information/data through a computer network such as internet and/or various types of telecommunication networks and other devices.

The computing unit 501 may be various types of general and/or dedicated processing components with processing and computing ability. Some examples of the computing unit 501 include but not limited to a central processing unit (CPU), a graphics processing unit (GPU), various dedicated artificial intelligence (AI) computing chips, various computing units running a machine learning model algorithm, a digital signal processor (DSP), and any appropriate processor, controller, microcontroller, etc. The computing unit 501 executes various methods and processings as described above, and for example, a method for training a graph processing network model. For example, in some embodiments, the method for training a graph processing network model may be further implemented as a computer software program, which is physically contained in a machine readable medium, such as the storage unit 508. In some embodiments, a part or all of the computer program may be loaded and/or installed on the device 500 through the ROM 502 and/or the communication unit 509. When the computer program is loaded on the RAM 503 and executed by the computing unit 501, one or more steps in the method for training a graph processing network model as described above may be performed. Alternatively, in other embodiments, the computing unit 501 may be configured to perform the method for training a graph processing network model in other appropriate methods (for example, by virtue of a firmware).

Various implementation modes of systems and technologies described herein may be implemented in a digital electronic circuit system, an integrated circuit system, a field programmable gate array (FPGA), a dedicated application specific integrated circuit (ASIC), a system on a chip (SoC), a load programmable logic device (CPLD), a computer hardware, a firmware, a software, and/or combinations thereof. The various implementation modes may include: being implemented in one or more computer programs, and the one or more computer programs may be executed and/or interpreted on a programmable system including at least one programmable processor, and the programmable processor may be a dedicated or a general-purpose programmable processor that may receive data and instructions from a storage system, at least one input apparatus, and at least one output apparatus, and transmit the data and instructions to the storage system, the at least one input apparatus, and the at least one output apparatus.

A computer code configured to execute a method in the disclosure may be written with one or any combination of multiple programming languages. These programming languages may be provided to a processor or a controller of a general purpose computer, a dedicated computer, or other apparatuses for programmable data processing so that the function/operation specified in the flowchart and/or block diagram may be performed when the program code is executed by the processor or controller. A computer code may be executed completely or partly on the machine, executed partly on the machine as an independent software package and executed partly or completely on the remote machine or server.

In the context of the disclosure, a machine-readable medium may be a tangible medium that may contain or store a program intended for use in or in conjunction with an instruction execution system, apparatus, or device. A machine-readable medium may be a machine readable signal medium or a machine readable storage medium. The machine-readable storage medium may include but not limited to an electronic, magnetic, optical, electromagnetic, infrared, or semiconductor system, apparatus or device, or any appropriate combination thereof. A more specific example of a machine readable storage medium includes an electronic connector with one or more cables, a portable computer disk, a hardware, a random access memory (RAM), a read-only memory (ROM), an EPROM programmable read-only ROM (an EPROM or a flash memory), an optical fiber device, and a portable optical disk read-only memory (CDROM), an optical storage device, a magnetic storage device, or any appropriate combination of the above.

In order to provide interaction with the user, the systems and technologies described here may be implemented on a computer, and the computer has: a display apparatus for displaying information to the user (for example, a CRT (cathode ray tube) or a LCD (liquid crystal display) monitor); and a keyboard and a pointing apparatus (for example, a mouse or a trackball) through which the user may provide input to the computer. Other types of apparatuses may further be configured to provide interaction with the user; for example, the feedback provided to the user may be any form of sensory feedback (for example, visual feedback, auditory feedback, or tactile feedback); and input from the user may be received in any form (including an acoustic input, a speech input, or a tactile input).

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation mode of the system and technology described herein), or a computing system including any combination of such back-end components, middleware components or front-end components. The system components may be connected to each other through any form or medium of digital data communication (for example, a communication network). Examples of communication networks include: a local area network (LAN), a wide area network (WAN), an internet and a blockchain network.

The computer system may include a client and a server. The client and server are generally far away from each other and generally interact with each other through a communication network. The relation between the client and the server is generated by computer programs that run on the corresponding computer and have a client-server relationship with each other. A server may be a cloud server, also known as a cloud computing server or a cloud host, is a host product in a cloud computing service system, to solve the shortcomings of large management difficulty and weak business expansibility existed in the traditional physical host and Virtual Private Server (VPS) service. A server further may be a server with a distributed system, or a server in combination with a blockchain.

It should be understood that, various forms of procedures shown above may be configured to reorder, add or delete blocks. For example, blocks described in the disclosure may be executed in parallel, sequentially, or in a different order, as long as the desired result of the technical solution disclosed in the disclosure may be achieved, which will not be limited herein.

The above specific implementations do not constitute a limitation on the protection scope of the disclosure. Those skilled in the art should understand that various modifications, combinations, sub-combinations and substitutions may be made according to design requirements and other factors. Any modification, equivalent replacement, improvement, etc., made within the spirit and principle of embodiments of the disclosure shall be included within the protection scope of embodiments of the disclosure.

## Claims

1. A method for sorting search results, comprising:

acquiring a plurality of first search results corresponding to a search request and an initial order of the plurality of first search results corresponding to the search request; determining a type and a style of each of at least one first search result in response to the at least one first search result being push information; based on a preset mapping relationship, determining a first score corresponding to each of the at least one first search result according to the type and the style of each of the at least one first search result; and acquiring an updated order of the plurality of first search results by adjusting the initial order in order of the first score from largest to smallest.

2. The method according to claim 1, wherein acquiring the initial order of the plurality of first search results corresponding to the search request comprises: determining the initial order of the plurality of first search results based on a relevance of each of the plurality of first search results to the search request, and a number of clicks of each of the plurality of first search results within a preset duration.

3. The method according to claim 1 or 2, wherein acquiring the initial order of the plurality of first search results corresponding to the search request comprises:

   determining at least one vertical class label to which the search request is currently mapped; calculating a second score of each of the at least one vertical class label based on a preset value index; determining a relevance of each of the plurality of first search results to each of the at least one vertical class label; determining a third score of each of the plurality of first search results based on the relevance of each of the plurality of first search results to each of the at least one vertical class label, and the second score of each of the at least one vertical class label; and determining the initial order of the plurality of first search results based on the third score corresponding to each of the plurality of first search results.

4. The method according to any one of claims 1 to 3, further comprising:

   determining a historical search frequency and a historical click value rate corresponding to each of the plurality of first search results; and determining a first search result with the historical search frequency greater than a first threshold and/or the historical click value rate greater than a second threshold as the push information.

5. The method according to any one of claims 1 to 4, further comprising:

   acquiring historical search results for a specified historical duration; determining a fourth score corresponding to each of the historical search results based on a preset value index; and determining the mapping relationship between each type and each style and the first score based on an average value of the fourth scores of the historical search results with a same type and a same style.

6. The method according to any one of claims 1 to 5, wherein acquiring the updated order of the plurality of first search results by adjusting the initial order in order of the first score from largest to smallest, the method further comprises:

   determining a current arrangement position of each of the plurality of first search results; and inserting a second search result into a specified display position in the arrangement position, wherein the second search result is a predetermined search result having a specified page feature or a specified page content.

7. The method according to claim 6, wherein inserting the second search result into the specified display position in the arrangement position comprises:

   inserting the second search result into the specified display position in the arrangement position in response to there being one second search result; or, inserting a plurality of second search results into each of the specified display positions in the arrangement position in a preset order in response to there being the plurality of second search results.

8. The method according to any one of claims 1 to 7, wherein acquiring the plurality of first search results corresponding to the search request and the initial order of the plurality of first search results corresponding to the search request comprises:

   acquiring the plurality of first search results corresponding to the search request and device attribute information of initiating the search request; determining a reference order associated with the device attribute information based on a preset mapping relationship; and

determining the initial order of the plurality of first search results based on the reference order.

9. The method according to claim 8, wherein the device attribute information comprises at least one of: a device type, a network type used by a device and attribute information of a user to which the device belongs.

10. An apparatus for sorting search results, comprising:

a first acquiring module, configured to acquire a plurality of first search results corresponding to a search request and an initial order of the plurality of first search results corresponding to the search request;
a first determining module, configured to determine a type and a style of each of at least one first search result in response to the at least one first search result being push information;
a second determining module, configured to, based on a preset mapping relationship, determine a first score corresponding to each of the at least one first search result according to the type and the style of each of the at least one first search result; and
a second acquiring module, configured to acquire an updated order of the plurality of first search results by adjusting the initial order in order of the first score from largest to smallest.

11. The apparatus according to claim 10, wherein the first acquiring module is specifically configured to: determine the initial order of the plurality of first search results based on a relevance of each of the plurality of first search results to the search request, and a number of clicks of each of the plurality of first search results within a preset duration.

12. The apparatus according to claim 10 or 11, wherein the first acquiring module is specifically configured to:

determine at least one vertical class label to which the search request is currently mapped;
calculate a second score of each of the at least one vertical class label based on a preset value index;
determine a relevance of each of the plurality of first search results to each of the at least one vertical class label;
determine a third score of each of the plurality of first search results based on the relevance of each of the plurality of first search results to each of the at least one vertical class label, and the second score of each of the at least one vertical class label; and
determine the initial order of the plurality of first search results based on the third score corresponding to each of the plurality of first search results.

13. The apparatus according to any one of claims 10 to 12, wherein the first acquiring module is further configured to:

determine a historical search frequency and a historical click value rate corresponding to each of the plurality of first search results; and
determine a first search result with the historical search frequency greater than a first threshold and/or the historical click value rate greater than a second threshold as the push information.

14. The apparatus according to any one of claims 10 to 13, wherein the second determining module is further configured to:

acquire historical search results for a specified historical duration;
determine a fourth score corresponding to each of the historical search results based on a preset value index; and
determine the mapping relationship between each type and each style and the first score based on an average value of the fourth scores of the historical search results with a same type and a same style.

15. The apparatus according to any one of claims 10 to 14, wherein the second determining module comprises:

a determining unit, configured to determine a current arrangement position of each of the plurality of first search results; and
an insertion unit, configured to insert a second search result into a specified display position in the arrangement position, wherein the second search result is a predetermined search result having a specified page feature or a specified page content.

16. The apparatus according to claim 15, wherein the insertion unit is specifically configured to:

insert the second search result into the specified display position in the arrangement position in response to there being one second search result;
or,
insert a plurality of second search results into each of the specified display positions in the arrangement position in a preset order in response to there being the plurality of second search results.

**17.** The apparatus according to any one of claims 10 to 16, wherein the first acquiring module is specifically configured to:

> acquire the plurality of first search results corresponding to the search request and device attribute information of initiating the search request;
> determine a reference order associated with the device attribute information based on a preset mapping relationship; and
> determine the initial order of the plurality of first search results based on the reference order.

**18.** The apparatus according to claim 17, wherein the device attribute information comprises at least one of: a device type, a network type used by a device and attribute information of a user to which the device belongs.

**19.** An electronic device, comprising:

> at least one processor; and
> a memory communicatively connected to the at least one processor and for storing instructions executable by the at least one processor,
> wherein when the instructions are performed by the at least one processor, the at least one processor is caused to perform the method in any one of claims 1 to 9.

**20.** A non-transitory computer-readable storage medium having computer instructions stored thereon, wherein the computer instructions are configured to cause a computer to perform the method of any one of claims 1 to 9.

**21.** A computer program product comprising a computer program, wherein the computer program is configured to implement steps of the method of any one of claims 1 to 9 when performed by a processor.

101

acquiring a plurality of first search results corresponding to a search request and an initial order of the plurality of first search results corresponding to the search request

102

determining a type and a style of each of at least one first search result in response to the at least one first search result being push information

103

based on a preset mapping relationship, determining a first score corresponding to each of the at least one first search result according to the type and the style of each of the at least one first search result

104

acquiring an updated order of the plurality of first search results by adjusting the initial order in order of the first score from largest to smallest

FIG. 1

201

acquiring a plurality of first search results corresponding to a search request

202

determining at least one vertical class label to which the search request is currently mapped

203

calculating a second score of each of the at least one vertical class label based on a preset value index

204

determining a relevance of each of the plurality of first search results to each of the at least one vertical class label

205

determining a third score of each of the plurality of first search results based on the relevance of each of the plurality of first search results to each of the at least one vertical class label, and the second score of each of the at least one vertical class label

206

determining the initial order of the plurality of first search results based on the third score corresponding to each of the plurality of first search results

207

determining a historical search frequency and a historical click value rate corresponding to each of the plurality of first search results

208

determining a first search result with the historical search frequency greater than a first threshold and/or the historical click value rate greater than a second threshold as the push information

209

determining a type and a style of each of at least one first search result in response to the east one first search result being push information

210

based on a preset mapping relationship, determining a first score corresponding to each of the at least one first search result according to the type and the style of each of the at least one first search result

211

acquiring an updated order of the plurality of first search results by adjusting the initial order in order of the first score from largest to smallest

FIG. 2

acquiring a plurality of first search results corresponding to a search request and an initial order of the plurality of first search results corresponding to the search request — 301

determining a type and a style of each of at least one first search result in response to the at least one first search result being push information — 302

acquiring historical search results for a specified historical duration — 303

determining a fourth score corresponding to each of the historical search results based on a preset value index — 304

determining the mapping relationship between each type and each style and the first score based on an average value of the fourth scores of the historical search results with a same type and a same style — 305

based on the preset mapping relationship, determining a first score corresponding to each of the at least one first search result according to the type and the style of each of the at least one first search result — 306

acquiring an updated order of the plurality of first search results by adjusting the initial order in order of the first score from largest to smallest — 307

determining a current arrangement position of each of the plurality of first search results — 308

inserting a second search result into a specified display position in the arrangement position. The second search result is a predetermined search result having a specified page feature or a specified page content — 309

FIG. 3

acquiring a plurality of first search results corresponding to a search request and device attribute information of initiating the search request — 401

determining a reference order associated with the device attribute information based on a preset mapping relationship — 402

determining the initial order of the plurality of first search results based on the reference order — 403

determining a type and a style of each of at least one first search result in response to the at least one first search result being push information — 404

based on a preset mapping relationship, determining a first score corresponding to each of the at least one first search result according to the type and the style of each of the at least one first search result — 405

acquiring an updated order of the plurality of first search results by adjusting the initial order in order of the first score from largest to smallest — 406

FIG. 4

50

apparatus for sorting search results

510

first acquiring module

520

first determining module

530

second determining module

540

second acquiring module

FIG. 5

500

501
computing unit

502
ROM

503
RAM

504

505
I/O interface

506
input unit

507
output unit

508
storage unit

509
communication unit

FIG. 6

## INTERNATIONAL SEARCH REPORT

International application No.

**PCT/CN2022/128370**

### A. CLASSIFICATION OF SUBJECT MATTER

G06F16/2457(2019.01)i;G06F16/215(2019.01)i;G06N3/04(2023.01)i

According to International Patent Classification (IPC) or to both national classification and IPC

### B. FIELDS SEARCHED

Minimum documentation searched (classification system followed by classification symbols)

G06F16/-; G06N3/-

Documentation searched other than minimum documentation to the extent that such documents are included in the fields searched

Electronic data base consulted during the international search (name of data base and, where practicable, search terms used)

CNTXT, ENTXTC, VEN, CNKI, IEEE: 搜索, 检索, 查询, 排序, 推送, 推荐, 映射, 得分, 评分, 分数, 类型, 类别, 样式, 格式, RETRIEV+, SEARCH+, QUER+, SORT+, PUSH+, RECOMMEND+, MAP+, SCORE+, GOAL+, POINT+, RATING, TYPE, STYLE, PATTERN, LAYOUT

### C. DOCUMENTS CONSIDERED TO BE RELEVANT

| Category* | Citation of document, with indication, where appropriate, of the relevant passages | Relevant to claim No. |
|---|---|---|
| PX | CN 115017200 A (BEIJING BAIDU NETCOM SCIENCE AND TECHNOLOGY CO., LTD.) 06 September 2022 (2022-09-06) claims 1-21 | 1-21 |
| Y | CN 113934938 A (BEIJING ZITIAO NETWORK TECHNOLOGY CO., LTD.) 14 January 2022 (2022-01-14) description, paragraphs 37-68 | 1-21 |
| Y | CN 112000871 A (BEIJING SANKUAI ONLINE TECHNOLOGY CO., LTD.) 27 November 2020 (2020-11-27) description, paragraphs 69-124 | 1-21 |
| A | CN 112925878 A (TENCENT TECHNOLOGY (SHENZHEN) CO., LTD.) 08 June 2021 (2021-06-08) entire document | 1-21 |
| A | US 2013325838 A1 (YAHOO! INC.) 05 December 2013 (2013-12-05) entire document | 1-21 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 February 2023** | **23 February 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

International application No.

**PCT/CN2022/128370**

| Patent document cited in search report | | Publication date (day/month/year) | Patent family member(s) | Publication date (day/month/year) |
|---|---|---|---|---|
| CN | 115017200 | A | 06 September 2022 | None | |
| CN | 113934938 | A | 14 January 2022 | None | |
| CN | 112000871 | A | 27 November 2020 | None | |
| CN | 112925878 | A | 08 June 2021 | None | |
| US | 2013325838 | A1 | 05 December 2013 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210619839